# EUROPEAN PATENT APPLICATION

(11) **EP 4 306 593 A1**
(43) Date of publication of application: **17.01.2024**
(21) Application number: 22766615.3
(22) Date of filing: 18.01.2022
(51) Int. Cl.: C08L 63/00, H01F 41/02, H01F 1/26, C08K 3/01, H01F 27/255

(54) **MAGNETIC PASTE**

(30) Priority: 10.03.2021 JP 2021038169
(71) Applicant: Nisshinbo Holdings Inc., Tokyo 103-8650 (JP)
(72) Inventor: ISHIZAKI Yuki, Chiba-city, Chiba 267-0056 (JP); TOMITA Hideshi, Chiba-city, Chiba 267-0056 (JP)
(74) Representative: Ter Meer Steinmeister & Partner
(86) International application number: PCT/JP2022/001597
(87) International publication number: WO 2022/190647

(57) **Abstract**

A magnetic paste which comprises an epoxy resin (A) having an aromatic ring, an epoxy compound (B), a soft-magnetic powder (C), and a hardener (D), wherein the (A), (B), and (D) components have 25°C viscosities which have relationships (A) > (B) and (A) > (D), and the content of the soft-magnetic powder (C) is 90-96 mass% of the whole magnetic paste. A mixture consisting only of the (A) to (D) components has a 25°C viscosity, measured with a Brookfield viscometer with a no. 4 rotor at a rotation speed of 0.6 rpm, of 100-1,000 Pa·s at five seconds after initiation of the measurement. This magnetic paste has flowability which can be poured into the mold but is inhibited from suffering the sedimentation of the magnetic particles, and gives a cured object in which up to the upper layer is filled with the soft-magnetic powder even after the thermal curing.

## Description

### TECHNICAL FIELD

The present invention relates to a magnetic paste.

### BACKGROUND ART

In recent years, with the electrification of automobiles, magnetic cores are often used in vehicles, and so requirements for their reliability are growing ever higher. In particular, there exists a desire for improved properties such as a higher thermal shock resistance in magnetic cores intended for use in vehicles.

The core portion of a magnetic core is commonly formed of a resin molding material containing a soft magnetic powder as the filler. Various efforts have hitherto been made to achieve high loadings of soft magnetic powder in molding materials and also to impart flowability to materials having a high loading of magnetic powder.

For example, Patent Document 1 discloses that by coating magnetic particles with a specific silicone compound, a high loading and a high flowability can both be achieved.

Patent Document 2 discloses that by using, together with a magnetic powder, a filler having a given average particle size, a magnetic paste can be obtained which has a suitable viscosity and in which resin sag is suppressed.

In addition, improvements that involve adding a solvent or using a low-viscosity resin are also being variously investigated.

However, lowering the viscosity of the overall material or the viscosity of the resin readily gives rise to precipitation of the soft magnetic powder, which is a major cause of crack formation in the resulting molded product in environments where heating and cooling repeatedly take place.

That is, when the composition at the top and the bottom of the molded product ends up differing substantially due to the degree of precipitation by the soft magnetic powder, given the difference in the linear thermal expansion coefficients of the soft magnetic powder and the resin, cracks may well arise due to thermal shock.

### PRIOR ART DOCUMENTS

### PATENT DOCUMENTS

Patent Document 1: JP-A 2020-114939
Patent Document 2: WO 2020/105704 A1

### SUMMARY OF INVENTION

### TECHNICAL PROBLEM

In light of such circumstances, the object of the present invention is to provide a magnetic paste having a flowability which can be poured into the mold, yet in which the precipitation of magnetic particles is suppressed, thus enabling a magnetic cured product to be obtained which, even after heat curing, is loaded to the top layer with magnetic powder and is not prone to cracking even in an environment where heating and cooling repeatedly take place.

### SOLUTION TO PROBLEM

The inventors have conducted intensive investigations in order to achieve the above object. As a result, they have discovered that a magnetic paste which uses a combination of specific epoxy resins and for which the viscosity of a mixture composed of the epoxy resins, a curing agent and a soft magnetic powder satisfies a prescribed range has a flowability which can be poured into the mold in spite of the relatively high content of soft magnetic powder and yet precipitation of the magnetic particles is suppressed, thus giving a magnetic cured product which, even after heat curing, is loaded to the top layer with magnetic powder and in which crack formation is suppressed. This discovery ultimately led to the present invention.

Accordingly, the invention provides:
1. A magnetic paste containing (A) an epoxy resin having an aromatic ring, (B) an epoxy compound, (C) a soft magnetic powder and (D) a curing agent,
   wherein components (A), (B) and (D) have respective viscosities at 25°C that satisfy the viscosity relationships (A) > (B) and (A) > (D),
   the soft magnetic powder (C) is included in an amount of from 90 to 96 wt% of the overall magnetic paste, and
   a mixture consisting of components (A) to (D) has a viscosity at 25°C, as determined five seconds after the start of measurement using a Brookfield viscometer with a No. 4 rotor at a rotational speed of 0.6 rpm, of from 100 to 1,000 Pa s;
2. The magnetic paste of 1 above, wherein the mixture consisting of components (A) to (D) has a thixotropy index (TI), defined as the ratio (V1/V2) of the viscosity (V1) five seconds following the start of measurement using a Brookfield viscometer at 100°C with a No. 3 rotor and at a rotational speed of 0.6 rpm to the viscosity (V2) following one minute of continued rotation thereafter by the rotor, is 1.0 or more;
3. The magnetic paste of 1 or 2 above which is free of solvent;
4. The magnetic paste of any of 1 to 3 above, wherein the epoxy compound (B) is an epoxy compound without an aromatic ring;
5. The magnetic paste of 4 above, wherein the epoxy compound (B) is represented by formula (1) or (2) below 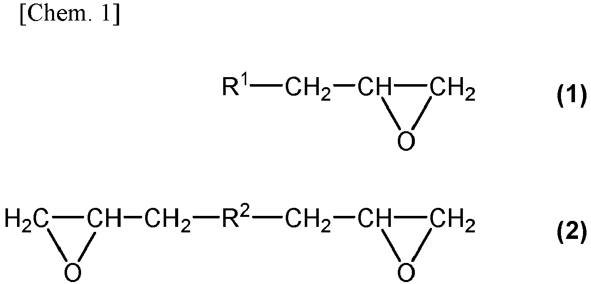 (wherein R¹ is a monovalent organic group that does not include a cyclic structure, and R² is a divalent organic group that does not include a cyclic structure);
6. The magnetic paste of any of 1 to 5 above, wherein the epoxy resin (A) is a liquid at 25°C and is included in an amount that accounts for at least 25 wt% of the combined weight of components (A), (B) and (D);
7. The magnetic paste of any of 1 to 6 above, wherein the epoxy compound (B) has a viscosity at 25°C that is not more than 300 mPa·s;
8. The magnetic paste of any of 1 to 7 above, wherein the curing agent (D) is an acid anhydride having a viscosity at 25°C that is not more than 110 mPa·s;
9. A magnetic cured product obtained from the magnetic paste of any of 1 to 8 above;
10. A magnetic core comprising a case having a coil disposed therein, and the magnetic cured product of 9 above which is filled within the case in such manner as to cover the coil;
11. The magnetic core of 10 above, wherein the soft magnetic powder (C) occupying a surface layer of the core has a load ratio therein of at least 83 wt%; and
12. A method for producing a magnetic core, which method includes the steps of pouring the magnetic paste of any of 1 to 8 above into a case having a coil disposed therein, and curing the magnetic paste.

### ADVANTAGEOUS EFFECTS OF INVENTION

Because the magnetic paste of the invention has a good flowability at room temperature, it can fill a case having a complex shape or the interior of a tightly wound coiled wire with a soft magnetic powder.

By using the magnetic paste of the invention, soft magnetic powder is loaded up to the top layer portion within the casting mold for a coil case or the like, and so the thermal shock resistance of the resulting magnetic core increases and the mechanical properties of the top layer portion improve.

### DESCRIPTION OF EMBODIMENTS

The invention is described more fully below.

The magnetic paste of the invention includes (A) an epoxy resin having an aromatic ring, (B) an epoxy compound, (C) a soft magnetic powder and (D) a curing agent.

### (1) (A) Epoxy Resin Having Aromatic Ring

Component (A) is not particularly limited, provided that it is an epoxy resin having an aromatic ring on the molecule. It may be suitably selected from among known epoxy resins of this type, although an epoxy resin that is liquid at 25°C is preferred from the standpoint of the castability of the magnetic paste.

Specific examples include bisphenol A type epoxy resins, bisphenol F type epoxy resins, bisphenol S type epoxy resins, biphenyl type epoxy resins, naphthalene type epoxy resins, novolac type epoxy resins, and modified bisphenol A type epoxy resins that are known as flexible and tough epoxy resins. One of these may be used alone, or two or more may be used in combination.

The epoxy resin serving as component (A) is included in the paste in an amount that is preferably at least 25 wt%, more preferably from 25 to 49 wt%, and even more preferably from 35 to 45 wt%, of the overall resin consisting of components (A), (B) and (D).

The epoxy resin serving as component (A) has a viscosity at 25°C which is preferably from 1 to 50 Pa s, more preferably from 1 to 30 Pa s, and even more preferably from 1 to 25 Pa·s. Here and below, the viscosity is a measured value obtained with a Brookfield viscometer.

A commercial product may be used as the epoxy resin serving as component (A). Specific examples include, but are not limited to, the naphthalene type epoxy resin HP4032D, the bisphenol A/F type mixed epoxy resin EXA-835LV and the flexible and tough epoxy resin EXA4850-150, all of which available from DIC Corporation.

### (2) (B) Epoxy Compound

The magnetic paste of the invention includes, together with above component (A), (B) an epoxy compound which differs from and has a lower viscosity than the epoxy resin (A).

Generally, when a large amount of soft magnetic material is included in a magnetic paste, the viscosity of the paste rises. However, by adding an epoxy compound having a lower viscosity than component (A), the viscosity of the magnetic paste can be lowered. Examples of reactive groups on the epoxy compound include epoxy, acryloyl, methacryloyl and oxetane groups. From the standpoint of further lowering the viscosity of the magnetic paste, an epoxy group is preferred.

With a compound which has, aside from the epoxy group, a ring structure, especially an aromatic ring, due to conjugation between the molecules, a rigid cured product having a stable molecular structure and high mechanical strength is generally obtained. On the other hand, because the cured product has a low toughness and a higher linear coefficient of expansion than metals, etc., it is characterized by being vulnerable to thermal shock such as intense heating and quenching. Hence, to adjust the toughness of the cured product, the epoxy compound (B) of the invention is preferably a compound that has no aromatic ring.

The epoxy compound without an aromatic ring that can be used as component (B) of the invention may be suitably selected from among known epoxy compounds of this type. Epoxy compounds which not only have no aromatic rings but also have no other cyclic structures such as aliphatic rings, heteroaromatic rings and heteroaliphatic rings are preferred. Epoxy compounds represented by formula (1) or (2) below are more preferred.

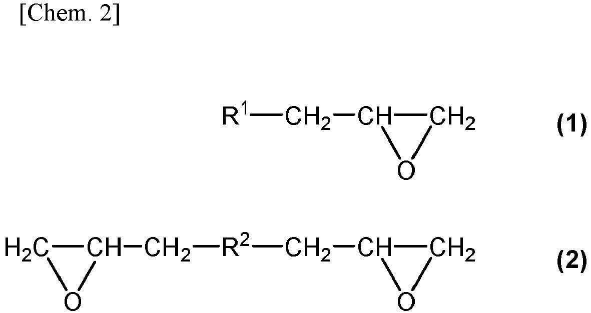

In formula (1), R¹ is a monovalent organic group that does not include a cyclic structure. In formula (2), R² is a divalent organic group that does not include a cyclic structure.

The monovalent organic group without a cyclic structure represented by R¹ is exemplified by acyclic alkoxy groups of 1 to 20 carbon atoms and R³O(R⁴O)ₙ- groups (R³ being a hydrogen atom or an acyclic alkyl group of 1 to 5 carbon atoms, R⁴ being an acyclic alkylene group of 1 to 20 carbon atoms, and n being an integer from 1 to 20).

Specific examples of the acyclic alkoxy group of 1 to 20 carbon atoms include methoxy, ethoxy, n-propoxy, i-propoxy, n-butoxy, sec-butoxy, t-butoxy, n-pentyloxy, n-hexyloxy, n-heptyloxy, n-octyloxy, 2-ethylhexyloxy, n-nonyloxy, n-decyloxy, n-undecyloxy, n-dodecyloxy, n-tridecyloxy, n-tetradecyloxy, n-pentadecyloxy, n-hexadecyloxy, n-heptadecyloxy, n-octadecyloxy, n-nonadecyloxy and n-icosyloxy groups.

Of these, acyclic alkoxy groups of 4 to 15 carbon atoms are preferred. Acyclic alkoxy groups of 4 to 14 carbon atoms are more preferred.

Specific examples of the acyclic alkyl groups of 1 to 5 carbon atoms represented by R³ include methyl, ethyl, n-propyl, i-propyl, n-butyl, sec-butyl, t-butyl and n-pentyl groups.

Specific examples of the acyclic alkylene groups of 1 to 20 carbon atoms represented by R⁴ include methylene, ethylene, propylene, trimethylene, tetramethylene, pentamethylene, neopentylene, hexamethylene, heptamethylene, octamethylene, nonamethylene, decamethylene, undecamethylene, dodecamethylene and tridecamethylene groups. Of these, acyclic alkylene groups of 2 to 12 carbon atoms are preferred, alkylene groups of 2 to 5 carbon atoms are more preferred; and ethylene and propylene groups are even more preferred.

The subscript 'n' is an integer from 1 to 20, and is preferably an integer from 1 to 10.

The divalent organic group having no cyclic structure represented by R² is exemplified by acyclic alkylene groups of 1 to 20 carbon atoms and -O(R⁴O)ₙ- groups (wherein R⁴ and n are as defined above), with -O(R⁴O)ₙ- groups being preferred.

Specific examples of the acyclic alkylene groups represented by R² include the same groups as mentioned above for R⁴.

Specific examples of the epoxy compounds of formula (1) include n-butyl glycidyl ether, 2-ethylhexyl glycidyl ether, dodecyl glycidyl ether and tridecyl glycidyl ether.

Specific examples of the epoxy compounds of formula (2) include ethylene glycol diglycidyl ether, diethylene glycol diglycidyl ether, polyethylene glycol #200 diglycidyl ether (n ≈ 4), polyethylene glycol #400 diglycidyl ether (n ≈ 9), propylene glycol diglycidyl ether, tripropylene glycol diglycidyl ether, polypropylene glycol #400 diglycidyl ether (n ≈ 7), neopentyl glycol diglycidyl ether, 1,4-butanediol diglycidyl ether, 1,6-hexanediol diglycidyl ether and 1,12-dodecanediol diglycidyl ether.

A commercial product may be used as the epoxy compound serving as component (B). Specific examples include, but are not limited to, those available from Kyoeisha Chemical Co., Ltd. under the trade names Epolite M-1230 (a C12, C13 mixed higher alcohol glycidyl ether), Epolite 40E (ethylene glycol diglycidyl ether), Epolite 100E (diethylene glycol diglycidyl ether), Epolite 200E (polyethylene glycol #200 diglycidyl ether), Epolite 400E (polyethylene glycol #400 diglycidyl ether), Epolite 70P (propylene glycol diglycidyl ether), Epolite 200P (tripropylene glycol diglycidyl ether), Epolite 400P (polypropylene glycol #400 diglycidyl ether), Epolite 1500NP (neopentyl glycol diglycidyl ether) and Epolite 1600 (1,6-hexanediol diglycidyl ether).

Component (B) may be one epoxy compound of formula (1) or (2) used alone, or two or more such epoxy compounds may be used in combination. One or more epoxy compound of formula (1) may be used together with one or more epoxy compound of formula (2).

The epoxy compound of component (B) has a viscosity which is not particularly limited. However, from the standpoint of the castability of the magnetic paste, the viscosity at 25°C is preferably not more than 300 mPa·s, more preferably not more than 280 mPa·s, and even more preferably not more than 260 mPa·s.

As mentioned above, components (A) and (B) are used together in the magnetic paste of the invention for the purpose of adjusting the stability to heat. However, when the amount of component (B) included is too high, the viscosity of the magnetic paste may become too low, allowing the magnetic powder to precipitate, or the strength of the resulting cured product may decrease. Therefore, components (A) and (B) are included in a weight ratio, expressed as (A) : (B), which is preferably from 99 : 1 to 50 : 50, and more preferably from 85 : 15 to 70 : 30.

### (3) (C) Soft Magnetic Powder

The soft magnetic powder is not particularly limited so long as it is a powder made of a material which, when an external magnetic field is removed, rapidly loses its magnetism and returns to its original state. Exemplary soft magnetic powders include iron-based metal powders, iron alloy-based metallic powders, ferrite powders and amorphous alloys.

Specific examples include iron-based metal powders such as pure iron powder; ferrite powders such as Mg-Zn ferrites, Fe-Mn ferrites, Mn-Zn ferrites, Mn-Mg ferrites, Cu-Zn ferrites, Mg-Mn-Sr ferrites, Ni-Zn ferrites, Ba-Zn ferrites, Ba-Mg ferrites, Ba-Ni ferrites, Ba-Co ferrites, Ba-Ni-Co ferrites and Y ferrites; iron alloy-based metallic powders such as Fe-Si alloy powders, Fe-Si-Al alloy powders, Fe-Cr alloy powders, Fe-Cr-Si alloy powders, Fe-Ni-Cr alloy powders, Fe-Cr-Al alloy powders, Fe-Ni alloy powders, Fe-Ni-Mo alloy powders, Fe-Ni-Mo-Cu alloy powders, Fe-Co alloy powders and Fe-Ni-Co alloy powders; and amorphous alloys such as Fe-based amorphous alloys and Co-based amorphous alloys.

These soft magnetic powders may be used singly or two or more may be used in combination.

Commercial products may be used as the soft magnetic powder serving as component (C). Specific examples include, but are not limited to, M05S from Powdertech Co., Ltd.; PST-S from Sanyo Special Steel Co., Ltd.; AW2-08, AW2-08PF20F, AW2-08PF10F, AW2-08PF3F, Fe-3.5Si-4.5CrPF20F, Fe-50NiPF20F, Fe-80Ni-4MoPF20F and KUAMET^{®} 6B2, all from Epson Atmix Corporation; LD-M, LD-MH, KNI-106, KNI-106GSM, KNI-106GS, KNI-109, KNI-109GSM and KNI-109GS, all from JFE Chemical Corporation; KNS-415, BSF-547, BSF-029, BSN-125, BSN-714 and BSN-828, all from Toda Kogyo Corporation; and JEMK-S and JEMK-H from Kinsei Matec Co., Ltd.

The soft magnetic powder has a mean particle size D₅₀ which is not particularly limited. However, taking into account the loading ability and other properties, the mean particle size is preferably from 1 to 100 µm, and more preferably from 10 to 80 µm. As used herein, D₅₀ refers to the particle diameter at 50% cumulation in the volume-based cumulative distribution.

In this invention, the content of the soft magnetic powder is from 90 to 96 wt%, preferably from 90 to 95 wt%, of the overall magnetic paste. By using above components (A) and (B) and also setting the soft magnetic powder content within this range, the resulting magnetic paste has a flowability which can be poured into the mold yet precipitation of the soft magnetic powder is suppressed, enabling a magnetic cured product to be obtained in which the soft magnetic powder is loaded up to the top layer even after heat curing

### (4) (D) Curing Agent

The magnetic paste of the invention includes an epoxy resin curing agent.

The curing agent used may be one that is suitably selected from among known epoxy resin curing agents.

Specific examples include tetrahydrophthalic anhydride, methyltetrahydrophthalic anhydride, hexahydrophthalic anhydride, methylhexahydrophthalic anhydride, methyl-5-norbornene-2,3-dicarboxylic anhydride, novolac phenolic resins, cresol-novolac phenolic resins, phthalic anhydride derivatives, dicyandiamide, aluminum chelates, and amine complexes of Lewis acids such as trifluoroboran (BF₃). These may be used singly or two or more may be used in combination.

In this invention, particularly from the standpoint of the castability of the magnetic paste, use can be made of a curing agent having a lower viscosity than the epoxy resin (A), with a curing agent that is liquid at 25°C being preferred, a curing agent having a viscosity at 25°C that is not more than 110 mPa·s being more preferred, an acid anhydride with a viscosity at 25°C that is not more than 70 mPa·s being even more preferred, and hexahydrophthalic anhydride or methylhexahydrophthalic anhydride being still more preferred.

Commercial products may be used as these liquid curing agents. Specific examples include, but are not limited to, those available under the trade names Rikacid MH-700, Rikacid MH-700G, Rikacid MH, Rikacid MH-T and Rikacid HNA-100 from New Japan Chemical Co., Ltd.; and KAYAHARD-MCD from Nihon Kayaku KK.

In the magnetic paste of the invention, a mixture consisting of above components (A) to (D) has a viscosity at 25°C, as determined five seconds after the start of measurement using a Brookfield viscometer with a No. 4 rotor at a rotational speed of 0.6 rpm, of from 100 to 1,000 Pa·s, preferably from 100 to 400 Pa·s, and more preferably from 200 to 380 Pa·s. By setting the viscosity of the above mixture in this range, the magnetic paste of the invention has a flowability which can be poured into the mold yet precipitation of the soft magnetic powder is suppressed, enabling a magnetic cured product to be obtained in which the soft magnetic powder is filled to the top layer even after heat curing.

In the magnetic paste of the invention, the mixture consisting of components (A) to (D) has a thixotropy index (TI), defined as the ratio (V1/V2) of the viscosity (V1) five seconds after the start of measurement using a Brookfield viscometer at 100°C with a No. 3 rotor and at a rotational speed of 0.6 rpm to the viscosity (V2) following one minute of continued rotation thereafter by the rotor, which is preferably 1.0 or more, and more preferably 1.4 or more.

Here, (V1) represents the viscosity when the above mixture has been heated from room temperature to 100°C; this can be regarded as the viscosity when the heated magnetic paste just prior to curing is at rest. (V2) represents the viscosity after a fixed shear force has been applied to the above mixture in a state where it has been heated from room temperature to 100°C; this can be regarded as the viscosity when the heated magnetic paste is in a fluid state. The thixotropy index defined by the value (V1/V2) therebetween represents the thixotropy of the magnetic paste at 100°C, and is an index which relates to the moldability of the magnetic paste and precipitation of the soft magnetic powder.

### (5) (E) Curing Accelerator

The magnetic paste of the invention may include as component (E) a curing accelerator in order to accelerate curing of the epoxy resin.

The curing accelerator serving as component (E) is exemplified by amine type curing accelerators, imidazole type curing accelerators, phosphorus-based curing accelerators, guanidine type curing accelerators and metal-based curing accelerators. From the standpoint of lowering the viscosity of the magnetic paste, amine type curing accelerators and imidazole type curing accelerators are preferred; imidazole type curing accelerators are more preferred. The curing accelerator may be used singly or two or more may be used in combination.

Specific examples of amine type curing accelerators include triethylamine, tributylamine, 4-dimethylaminopyridine, benzyldimethylamine, 2,4,6-tris(dimethylaminomethyl) phenol and 1,8-diazabicyclo(5,4,0)-undecene.

A commercial product may be used as the amine type curing accelerator. Specific examples include, but are not limited to, Novacure HX3088 and HX4732 from Asahi Kasei Corporation.

Specific examples of imidazole type curing accelerators include imidazole compounds such as 2-methylimidazole, 2-undecylimidazole, 2-heptadecylimidazole, 1,2-dimethylimidazole, 2-ethyl-4-methylimidazole, 1,2-dimethylimidazole, 2-ethyl-4-methylimidazole, 2-phenylimidazole, 2-phenyl-4-methylimidazole, 1-benzyl-2-methylimidazole, 1-benzyl-2-phenylimidazole, 1-cyanoethyl-2-methylimidazole, 1-cyanoethyl-2-undecylimidazole, 1-cyanoethyl-2-ethyl-4-methylimidazole, 1-cyanoethyl-2-phenylimidazole, 1-cyanoethyl-2-undecylimidazolium trimellitate, 1-cyanoethyl-2-phenylimidazolium trimellitate, 2,4-diamino-6-[2'-methylimidazolyl-(1')]-ethyl-s-triazine, 2,4-diamino-6-[2'-undecylimidazolyl-(1')]-ethyl-s-triazine, 2,4-diamino-6-[2'-ethyl-4'-methylimidazolyl-(1')]-ethyl-s-triazine, 2,4-diamino-6-[2'-methylimidazolyl-(1')]-ethyl-s-triazine isocyanuric acid adduct, 2-phenylimidazole isocyanuric acid adduct, 2-phenyl-4,5-dihydroxymethylimidazole, 2-phenyl-4-methyl-5-hydroxymethylimidazole, 2,3-dihydro-1H-pyrrolo[1,2-a]benzimidazole, 1-dodecyl-2-methyl-4-benzylimidazolium chloride, 2-methylimidazoline and 2-phenylimidazoline.

A commercial product may be used as the imidazole type curing accelerator. Examples of commercial products include, but are not limited to, 2PHZ-PW and 2MZA-PW from Shikoku Chemicals Corporation.

The magnetic paste of the invention may include a solvent for such purposes as to adjust the viscosity. However, from the standpoint of preventing, for example, the formation of cracks during curing of the magnetic paste or the occurrence of swelling due to air bubbles and heat of vaporization, it is preferable to not include a solvent.

The magnetic paste of the invention may also optionally include other additives, so long as the advantageous effects of the invention are achieved. Such other additives are exemplified by dispersants, curing retardants, thermoplastic resins, flame retardants, thickeners, foam inhibitors, leveling agents, adhesion promoters and colorants.

The magnetic paste of the invention can be obtained by compounding above components (A) to (E) in any order and mixing these together. The mixing method is exemplified by techniques that use a known stirring apparatus such as a three-roll mill, rotary mixer or planetary mixer/deaerator.

A magnetic cured product can be obtained by heat-curing the magnetic paste of the invention.

Also, because the magnetic paste of the invention has a flowability that enables cast molding even in the absence of a solvent, a magnetic core can be obtained by pouring this into a case in which a coil has been disposed and then heat-curing the poured magnetic paste.

As described above, because the magnetic paste of the invention has a high content of soft magnetic powder and a relatively high viscosity, the soft magnetic powder remains in the surface layer of the loaded side (top side) even after molding. Hence, the resulting magnetic core does not readily crack in thermal shock tests and exhibits a good resistance to heat cycling.

In the magnetic core of the invention, the load ratio of the soft magnetic powder occupying the surface layer is preferably 83 wt% or more, more preferably 85 wt% or more, and still more preferably 87 wt%. The method of measuring the load ratio of the magnetic powder is described below in the Examples.

The heating temperature varies depending on, for example, the type of curing accelerator used, and so cannot be strictly specified, but is typically 100°C or above. For example, when using an amine type curing accelerator, it is preferably 120°C or more; when using an imidazole type curing accelerator, it is preferably 150°C or more.

The heating means is not particularly limited, and may be suitably selected from among known heating means.

When the magnetic paste of the invention is a solvent-free paste, curing can be effected under static pressure without drawing a vacuum.

### EXAMPLES

The invention is illustrated more fully below by way of Examples and Comparative Examples, although the invention is not limited by these Examples.

Details on the materials used in the Examples are given below.

### [Epoxy Resin (A)]

| | |
|---|---|
| Epoxy Resin A1: | Bisphenol A/F type mixed epoxy resin EXA-835LV, from DIC Corporation; viscosity (25°C), 2,000 to 2,500 mPa·s |
| Epoxy Resin A2: | Naphthalene type epoxy resin HP4032D, from DIC Corporation |

### [Epoxy Compound (B)]

| | |
|---|---|
| Epoxy Compound B1: | Denacol EX-201, from Nagase ChemteX Corporation; viscosity (25°C), 250 mPa·s |
| Epoxy Compound B2: | Epolite 100E, from Kyoeisha Chemical Co., Ltd.; viscosity (25°C), 19 to 25 mP·s |
| Epoxy Compound B3: | Epolite 400E, from Kyoeisha Chemical Co., Ltd.; viscosity (25°C), 60 to 110 mP·s |

### [Soft Magnetic Powder (C)]

Fe-based amorphous alloy powder

### [Curing Agent (D)]

Rikacid MH-700, from New Japan Chemical Co., Ltd.; viscosity (25°C), approx. 60 mP·s

### [Curing Accelerator]

2PHZ-PW, from Shikoku Chemicals Corporation

### [Organic Solvent]

n-Butanol

### [Examples 1 to 5, Comparative Examples 1 to 7]

The epoxy resin A, epoxy compound B, curing agent and curing accelerator were added to a standard bottle in the proportions (wt %) shown in Table 1 and stirred for one hour at room temperature using a magnetic stirrer, thereby preparing a resin liquid in which the curing accelerator is dispersed. The curing accelerator was added in a uniform amount of 0.5 part by weight with respect to the overall resin.

Next, the resin liquid thus prepared was transferred to a disposable cup, the soft magnetic powder was added in the proportion shown in Table 1 and the contents were mixed by hand, giving a slurry. Stirring was then carried out using a planetary mixer/deaerator (KK-V350W, from Kurabo Industries, Ltd.) under Condition 1 below, following which mixing and deaeration were carried out under Condition 2 while drawing a vacuum, thereby preparing a magnetic paste.

### Condition 1

30 seconds of stirring at a rotation setting of 3 and a revolution setting of 5 →
60 seconds of stirring at a rotation setting of 3 and a revolution setting of 7 →
30 seconds of stirring at a rotation setting of 3 and a revolution setting of 9

### Condition 2

120 seconds of stirring at a rotation setting of 7 and a revolution setting of 5

The resulting magnetic paste was slowly cast into a case having a coil disposed at the interior, the paste being poured in from the corner of the case so as not to trap air. When half of the paste had been poured in, the remainder was poured in from the opposite corner. The cast case was tapped ten times to level out the liquid, following which it was placed in a constant-temperature dryer (DX-402, from Yamato Scientific Co., Ltd.) and cured by 1 hour of heating at 120°C and 1 hour of heating at 150°C, giving a magnetic core.

The following evaluations were carried out using the magnetic pastes or magnetic cores obtained in the above Examples and Comparative Examples. The results are presented in Table 1. Because viscosity measurement is impossible once the curing reaction has begun, measurements (1) and (2) below were carried out in the absence of curing accelerator (with only components (A) to (D) present).

### (1) Measurement of Room-Temperature Viscosity

The magnetic paste was filled into a 50 mL sample tube to a height of 6 cm and thoroughly dispersed with a spatula or the like, following which the viscosity was measured at 25°C using a Brookfield type rotational viscometer (here and below, TVB-10M, from Tokisangyo) after 5 seconds of rotation with a No. 4 rotor at a rotational speed of 0.6 rpm.

### (2) Measurement of Thixotropy Index (TI)

The magnetic paste was filled into a 50 mL sample tube to a height of 6 cm and the outer periphery of the sample tube was covered with a silicone rubber heater (here and below, from As One Corporation) and warmed. The warmed paste was thoroughly dispersed with a spatula or the like, following which, with the temperature held at 100°C, a Brookfield type rotational viscometer was used to measure the viscosity (V1) after 5 seconds of rotation with a No. 3 rotor at a rotational speed of 0.6 rpm. The viscosity (V2) following one minute of continued rotation thereafter by the rotor was also measured, and the thixotropy index represented by the ratio (V1/V2) was computed.

During the measurement of V1 and V2, temperature measurement was carried out by installing a type K thermocouple between the rubber heater and the sample tube and measuring the temperature on the outside surface of the sample tube. The temperature was maintained by connecting the rubber heater and the type K thermocouple to a digital temperature regulator (TR-K, from As One Corporation) and carrying out temperature control.

### (3) Measurement of Load Ratio

Five percent of the total height was scraped off the loaded side of the magnetic core with a file and about 200 mg of the removed material was collected as a sample. Using a thermogravimetric differential thermal analyzer (STA 2500, from Netzsch Japan K.K.) and setting the temperature ramp-up rate to 20°C/min and the highest temperature attained to 800°C, the load ratio of soft magnetic powder in the sample was computed from the percent weight loss on heating from 25°C to 600°C.

### (4) Thermal Shock Resistance

Using a thermal shock tester (TSA-71S-A, from Espec Corporation) and setting the temperature attained on the low temperature side to -55°C, the temperature attained on the high temperature side to 125°C and the temperature holding time to 30 minutes, the magnetic core was subjected to 100 thermal shock cycles and the surface of the core following the test was visually examined for cracks. Magnetic cores in which cracks were not visually observed were then examined for microscopic cracks using a zoom stereo microscope (CP745, from As One Corporation). In Table 1, those cores in which cracks were not observed with a microscope were rated as "○", those in which pouring into a case was impossible or cracks were visually observed were rated as "×", and those in which cracks were not visually observed, but microscopic cracks were seen under a microscope were rated as "△".

**[Table 1]**

| | | | | Example | | | | | Comparative Example | | | | | | |
|---|---|---|---|---|---|---|---|---|---|---|---|---|---|---|---|
| | | | | 1 | 2 | 3 | 4 | 5 | 1 | 2 | 3 | 4 | 5 | 6 | 7 |
| Component (A) | | Epoxy Resin A1 | | | 3.3 | 2.3 | 2.1 | 2.3 | 0.7 | 4.5 | 1.2 | 1.2 | 2.9 | | 2.3 |
| | | Epoxy Resin A2 | | 4.1 | | | | | | | | | | | 0.9 |
| Component (B) | | Epoxy Compound B1 | | | | | | 0.9 | | | | | | | |
| | | Epoxy Compound B2 | | | 1.0 | 0.9 | 0.8 | | 2.2 | 1.5 | 0.4 | 0.4 | | 2.9 | |
| | | Epoxy Compound B3 | | 1.3 | | | | | | | | | | | |
| Component (D) | | Curing agent | | 4.6 | 3.7 | 2.8 | 2.6 | 2.8 | 2.6 | 5.5 | 1.4 | 1.4 | 2.6 | 2.6 | 2.8 |
| Component (C) | | Soft magnetic powder | | 90.0 | 92.0 | 94.0 | 94.5 | 94.0 | 94.5 | 88.5 | 97.0 | 97.0 | 94.5 | 94.5 | 94.0 |
| Organic solvent | | | | | | | | | | | | 2.1 | | | |

| | Evaluations | | | | | | | | | | | | | | |
|---|---|---|---|---|---|---|---|---|---|---|---|---|---|---|---|
| Paste evaluations | | Room temperature viscosity (Pa·s) | | 367 | 324 | 207 | 302 | 251 | 65 | 32 | >1,000 | 320 | >1,000 | 40 | >1,000 |
| | | Thixotropy index | | 2.1 | 1.7 | 2.2 | 1.4 | 1.8 | 0.7 | 0.5 | - | 0.9 | - | 0.7 | - |
| Cured product evaluations | | Load ratio (wt%) | | 89 | 89.3 | 88.2 | 87 | 88 | 82.5 | <1.0 | - | 82.1 | - | 82.9 | - |
| | | Thermal shock resistance | Before test, visual | ○ | ○ | ○ | ○ | ○ | ○ | ○ | × | ○ | × | ○ | × |
| | | | After test, visual | ○ | ○ | ○ | ○ | ○ | △ | × | - | × | - | × | - |

As shown in Table 1, because the viscosities of the magnetic pastes prepared in Examples 1 to 5 have been adjusted within a given range, these pastes have a flowability which can be poured into the mold at room temperature. Moreover, although these magnetic pastes contain soft magnetic powder in a high density of from 90 to 96 wt%, precipitation of the powder is suppressed, enabling magnetic coils to be obtained in which the soft magnetic powder is loaded to the top layer even after heat curing. It is also apparent that, because these magnetic pastes contain an epoxy compound as component (B), a suitable toughness is imparted to the cured product and so cracks in the surface layer do not arise in thermal shock tests.

On the other hand, in the magnetic paste of Comparative Example 1 having a viscosity lower than the range of the invention, the thixotropy index is less than 1.0 and it is apparent that precipitation of the magnetic powder readily occurs, a resin layer separates out slightly during curing, and microscopic cracks form in the resin layer following the thermal shock resistance test.

In the magnetic paste of Comparative Example 2 having an added amount of magnetic powder smaller than the range of the invention, the thixotropy index is lower than 0.5, pronounced precipitation of the magnetic powder is observed, and it is apparent that a resin layer corresponding to at least 5% of the total height separates out during curing and visually observable cracks arise following the thermal shock resistance test.

The magnetic pastes of Comparative Examples 3, 5 and 7 each have a composition that falls outside the prescribed resin combinations or an added amount of soft magnetic powder that falls outside the given range. As a result, the viscosity of the paste increases, making it impossible to pour into a case in which a coil has been disposed. The magnetic paste of Comparative Example 4, which is obtained by adding a solvent to the paste of Comparative Example 3 in order to lower the viscosity, has a magnetic paste viscosity close to that of the examples of the invention, but cracks are found to arise from the resin layer following thermal shock resistance testing.

In the magnetic paste of Comparative Example 6 which does not include component (A), a sufficient strength is not obtained in the cured product and so, following thermal shock resistance testing, cracks are found to arise not only in the resin layer but also in the magnetic powder layer.

With regard to the magnetic core obtained in Example 4, when electrodes were connected to both ends of the coil wire and an 18 mA, 1.0 V, 100 kHz alternating current was applied, the inductance measured at that time using an LCR meter (LCR HiTester 3522, from Hioki E.E. Corporation) was approximately 350µH, confirming that satisfactory coil characteristics for a magnetic core are manifested.

## Claims

1. A magnetic paste comprising (A) an epoxy resin having an aromatic ring, (B) an epoxy compound, (C) a soft magnetic powder and (D) a curing agent,
wherein components (A), (B) and (D) have respective viscosities at 25°C that satisfy the viscosity relationships (A) > (B) and (A) > (D),
the soft magnetic powder (C) is included in an amount of from 90 to 96 wt% of the overall magnetic paste, and
a mixture consisting of components (A) to (D) has a viscosity at 25°C, as determined five seconds after the start of measurement using a Brookfield viscometer with a No. 4 rotor at a rotational speed of 0.6 rpm, of from 100 to 1,000 Pa s.

2. The magnetic paste of claim 1, wherein the mixture consisting of components (A) to (D) has a thixotropy index (TI), defined as the ratio (V1/V2) of the viscosity (V1) five seconds after the start of measurement using a Brookfield viscometer at 100°C with a No. 3 rotor and at a rotational speed of 0.6 rpm to the viscosity (V2) following one minute of continued rotation thereafter by the rotor, is 1.0 or more.

3. The magnetic paste of claim 1 or 2 which is free of solvent.

4. The magnetic paste of any one of claims 1 to 3, wherein the epoxy compound (B) is an epoxy compound without an aromatic ring.

5. The magnetic paste of claim 4, wherein the epoxy compound (B) is represented by formula (1) or (2) below 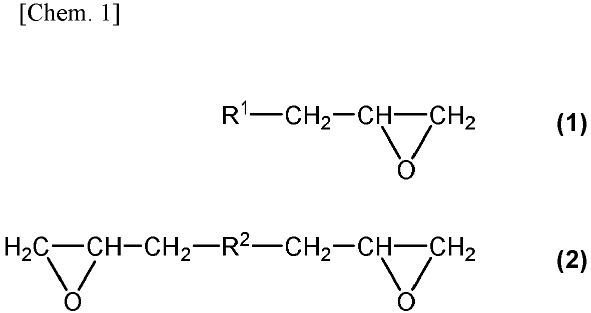 (wherein R¹ is a monovalent organic group that does not include a cyclic structure, and R² is a divalent organic group that does not include a cyclic structure).

6. The magnetic paste of any one of claims 1 to 5, wherein the epoxy resin (A) is a liquid at 25°C and is included in an amount that accounts for at least 25 wt% of the combined weight of components (A), (B) and (D).

7. The magnetic paste of any one of claims 1 to 6, wherein the epoxy compound (B) has a viscosity at 25°C that is not more than 300 mPa·s.

8. The magnetic paste of any one of claims 1 to 7, wherein the curing agent (D) is an acid anhydride having a viscosity at 25°C that is not more than 110 mPa·s.

9. A magnetic cured product obtained from the magnetic paste of any one of claims 1 to 8.

10. A magnetic core comprising a case having a coil disposed therein, and the magnetic cured product of claim 9 which is filled within the case in such manner as to cover the coil.

11. The magnetic core of claim 10, wherein the soft magnetic powder (C) occupying a surface layer of the core has a load ratio therein of at least 83 wt%.

12. A method for producing a magnetic core, comprising the steps of pouring the magnetic paste of any one of claims 1 to 8 into a case having a coil disposed therein, and curing the magnetic paste.
